# EUROPEAN PATENT APPLICATION

(11) **EP 2 366 524 A1**
(43) Date of publication of application: **21.09.2011**
(21) Application number: 11158469.4
(22) Date of filing: 16.03.2011
(51) Int. Cl.: B29C 44/32, E04C 2/288

(54) **Building panel**

(30) Priority: 16.03.2010 BE 201000165
(71) Applicant: Joris Ide NV, 8750 Zwevezele (BE)
(72) Inventor: Vierstraete, Kris, B-8210, Zedelgem (BE)
(74) Representative: pronovem

(57) **Abstract**

The present invention is related to a panel for use in building constructions comprising a metal plate (3), a layer of isolation material (3) and a concrete plate (4), wherein the isolation material is located between the metal plate and the concrete plate and wherein said isolation material is attached to the metal plate and the concrete plate and wherein the metal plate is not in physical contact with the concrete plate. The invention is equally related to various production methods for producing such a panel.

## Description

### Field of the invention

The invention is related to building materials, in particular building panels comprising multiple layers of materials.

### State of the art

Sandwich panels for buildings which are formed of a metal plate, an isolation material and a second metal plate are known in the art. When the isolation material is not fireproof, the fire-resistance of the outer metal plates may be insufficient to make the complete panel fireproof. These panels usually comprise thin steel plates, for example of 0.63mm in thickness. These panels are therefore sometimes insufficiently robust to withstand manipulating the panel during building, or to withstand potential damage during the lifetime of the panel.

Other known prefab panels are made of a concrete plate, an isolation material and a second concrete plate. These panels are quite heavy and can therefore only be handled with special lifting tools. Transport towards the building site must be especially adapted to this high weight, and is therefore expensive.

Document FR2599409 is related to an insulating slab consisting of a concrete covering interacting with flat beams forming a permanent formwork. The flat beams consist of a bent metal sheet pasted onto blocks of foam. The flanks of the metal sheet rise laterally so as to be trapped in the concrete covering. This document is related to the construction of concrete floors, with the concrete layer forming the actual floor surface, and therefore not to the production of panels which are assembled prior to installation as a wall or floorboard.

Document EP1528175 is related to a self-supporting fire-resistant building panel. The panel comprises a U-shaped metallic profile. A wire mesh extends between the upstanding portions of the U-shaped profile. A rock wool block is present between the flat underside of the U-shaped profile and the wire mesh, while a concrete layer covers an entire area of the rock wool block, with the mesh and part of the upstanding portions being embedded in the concrete layer. The concrete layer is in direct contact with the upstanding portions of the U-shaped metal profile.

In both of the two documents cited hereabove, the structure of metal/isolation/concrete can only be obtained by casting concrete into a mould formed by the metal plate. A direct contact between the concrete and the metal plate is thereby obtained, which contributes to the mechanical strength of the resulting panel. However, this production method is technically complex as it requires forming of the metal plate prior to casting of the concrete. Also, the connection metal/concrete represents a cold bridge which increases heat loss in a building. With the above-described production process, it is also impossible to obtain a concrete layer with a smooth surface.

### Aims of the invention

The invention aims to propose a panel which does not suffer from the above described disadvantages, and to propose one or more production methods for producing such a panel.

### Summary of the invention

The invention is related to a building panel and to production methods as disclosed in the appended claims.

The invention is thus related to a panel for use in building constructions comprising a metal plate, a layer of isolation material and a concrete plate, wherein the isolation material is located between the metal plate and the concrete plate, and wherein said isolation material is attached to the metal plate and the concrete plate and wherein the metal plate is not in physical contact with the concrete plate.

Said isolation layer may be self-adhesive. Said isolation material may be attached to the metal plate and the concrete plate through a glue layer. Said isolation material may be polyurethane (PUR) or polyisocyanurate (PIR). According to another embodiment, the isolation material is rock wool.

According to an embodiment, the layer of isolation material consists of a plurality of layers stacked on top of each other.

The panel may be provided at two sides with a tooth and groove shaped profile, wherein said tooth and groove are configured to fit together, so as to install two adjacent panels.

According to a preferred embodiment, the concrete plate is a polymer concrete plate.

The invention is equally related to a method for producing a panel according to the invention, wherein said method comprises the steps of :
- providing a concrete plate, followed by :
- providing a metal plate,
- providing an isolation layer between said concrete plate and said metal plate to thereby produce a stack of a concrete plate, an isolation layer and the metal plate,
- Exerting a pressure onto said stack so as to obtain said panel, without establishing a physical contact between the concrete plate and the metal plate.
According to a preferred embodiment, said concrete plate is a polymer concrete plate.

According to one embodiment, the method comprises the following steps :
- Depositing a layer of a concrete mixture on a moving surface, for example formed by a carrier foil advancing in its longitudinal direction,
- Heating said advancing concrete mixture, so that the mixture is at least partially cured and forms a concrete plate, moving forward in a direction parallel to the plate,
- Unrolling a metal plate and moving said metal plate forward in a direction parallel to the metal plate, at a speed which is substantially the same as the speed of the concrete plate,
- Providing an isolation material between the advancing concrete plate and the advancing metal plate.
- Feeding both the advancing concrete plate and metal plate into a press installation, wherein the advancing metal plate is pressed over a given distance against the advancing concrete plate, and wherein the isolation material becomes attached to the metal and concrete plates, to thereby form a continuous panel,
- Sawing the continuous panel into separate panels.

According to another embodiment, the method comprises the following steps :
- Providing a plurality of pre-produced concrete plates,
- Placing said concrete plates in sequence and in contact with each other onto a moving surface, so that a line is formed of panels advancing in longitudinal direction,
- Unrolling a metal plate and moving said metal plate forward in a direction parallel to the metal plate, at a speed which is substantially the same as the speed of the concrete plate,
- Providing an isolation material between the advancing concrete plates and the advancing metal plate.
- Feeding both the line of advancing concrete plates and the advancing metal plate into a press installation, wherein the advancing metal plate is pressed over a given distance against the advancing concrete plates, and wherein the isolation material becomes attached to the metal and concrete plates, to thereby form a continuous panel, consisting of a row of concrete plates with a continuous layer of isolation material and metal plate attached thereto,
- Sawing the continuous layer of isolation material and metal plate, to thereby obtain separate panels.

In the method of the invention, the isolation material may be a polyurethane (PUR) foam or a polyisocyanurate (PIR) foam which is deposited onto the advancing concrete plate or onto the advancing concrete plates in a casting installation, before the panel is formed in the press installation, and wherein the foam expands in volume in the press installation.

In the method of the invention, the isolation material may be a layer of rock wool, which is provided between the advancing concrete plate or concrete plates on the one hand and the advancing metal plate on the other hand, after a glue layer has been provided on the layer of rock wool and/or on the metal and concrete plate(s), and before the plates enter the press installation.

The panel according to the invention is relatively lightweight compared to prefab panels formed of two concrete layers and one isolation layer. By applying one concrete plate, the panel is still sufficiently robust during handling on the building site, and during the lifetime of the panel. Especially thanks to the presence of a concrete plate, the fire resistant properties of the panel is good, even when the isolating material has no or no optimal fire-resistant properties.

The panel of the invention has good mechanical properties, despite the absence of a direct contact between the metal plate and the concrete. The mechanical stiffness and strength properties are ensured by the presence of the concrete plate. Due to this structure, the metal plate no longer needs to serve as a mould for the concrete. This allows a straightforward way of producing the panel, preferably in a continuous production line, according to the method of the present invention. The absence of direct contact between metal and concrete avoids the occurrence of cold bridges, and the possibility to provide the concrete plate prior to the application of the isolation material and metal allows to use concreta plates with a smooth surface.

The sandwich panel can be installed with the concrete side facing outwards or inwards. This choice may depend on required fire-resistance, the outer aspect of the building or the desired thermal comfort inside the building.

### Brief description of the figures

Figure 1a is a schematic representation of a panel according to the invention, including detailed views of the edges of the panel.

Figure 2 shows the assembly of two panels according to a possible embodiment

Figure 3 illustrates a continuous production process for producing panels according to the invention.

Figure 4 illustrates a semi-continuous production process for producing panels according to the invention.

### Detailed description of the invention

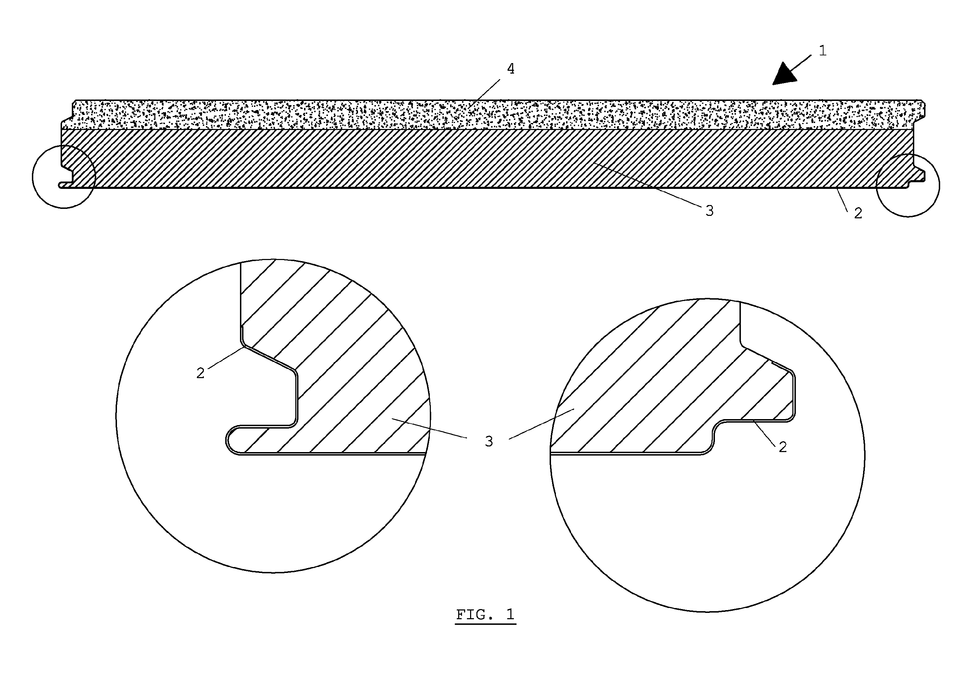

The invention is related to a building panel, preferably a roof or wall panel formed as a sandwich of different materials, in particular a sequence of a concrete plate, an isolation material and a metal plate. Figure 1 shows an embodiment of a panel 1 according to the invention, consisting of a metal plate 2, an intermediary layer 3 of isolation material, and a concrete plate 4. As shown in the details of the edges of the panel, the metal plate 2 is not embedded in or otherwise in contact with the concrete plate 4. The structure has good mechanical properties thanks to the presence of the concrete plate. Moreover, because there is no contact between the metal plate and the concrete, no cold bridge is formed and the production technique (as described later in this text) that can be used for producing panels according to the invention is technically straightforward and allows a fast production.

The concrete plate 4 can be formed of any known type of concrete, such as : light concrete, architectural concrete, fast drying concrete, silex concrete, coloured concrete. For the purpose of the present invention, the expression 'concrete plate' also covers all equivalent materials such as calcium-containing gypsum material or the like. The concrete plate can be armed with steel mats, steel fibers, glass or synthetic fibres or other reinforcing materials. According to a preferred embodiment, the concrete plate 4 is formed of polymer concrete.

The isolation layer 3 can be formed of Polyurethane (PUR), Polyisocyanurate (PIR), expanded polystyrene (EPS), extruded polystyrene (XPS), rock wool, glass foam or any other equivalent material. The isolation layer can be self-adhesive, in which case the adhesion to the metal and concrete plates takes place through the self-adhesive capacity of the isolation layer itself (this is the case for example for PUR and PIR). When the layer is not self-adhesive, a glue layer can be present between the concrete and the isolation material and between the metal and the isolation material. The isolation layer may consist of a stack of several layers.

The metal plate may be a steel plate, possibly a galvanized and lacquered steel plate, an aluminium plate, a stainless steel plate or a plate of any other metal such as zinc, copper, messing, bronze or other, or an alloy of several metals.

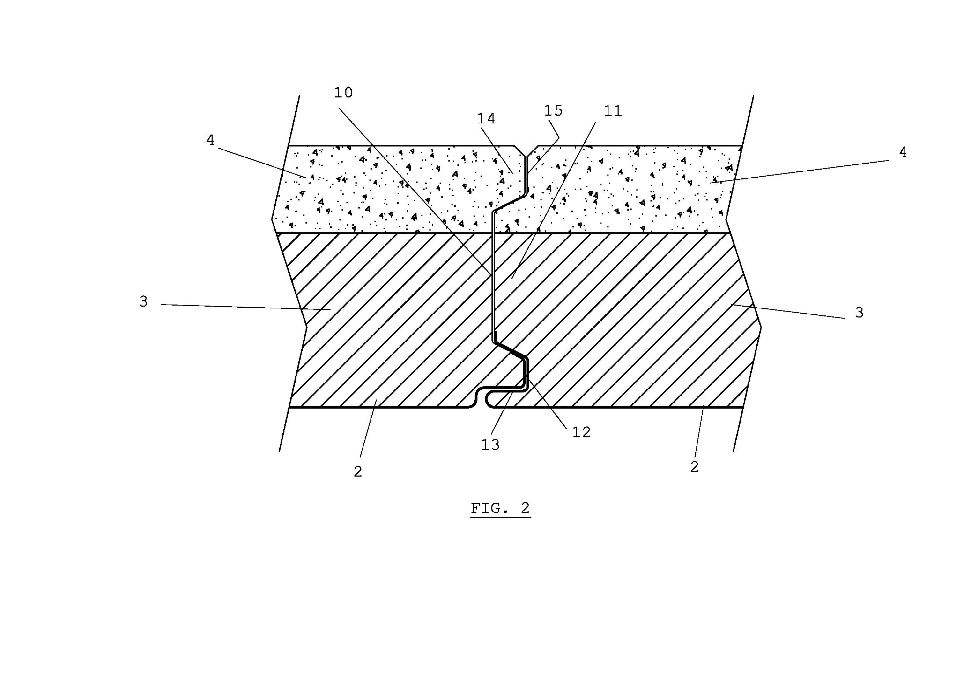

Figure 2 shows two panels according to the invention, assembled next to or on top of each other. The panel shown on the left hand side in the drawing is provided with a groove 10, while the right hand panel is provided with a tooth-shaped portion 11. The tooth and groove are configured to fit together.

As can be seen in the drawings, the metal plates 2 are provided at their ends with folded portions 12,13, which form the lower part of the groove and tooth shapes. Likewise, the concrete plates 4 are provided with portions 14 and 15, extending outwards from and inwards into the respective plates, which form the upper part of the groove and tooth shapes. The portions 12 to 15 are also present in existing panels formed of metal/isolation/metal or concrete/isolation/concrete. In a panel according to the invention, these portions can be shaped and manufactured in a shape and according to a method known in the state of the art.

A panel according to the invention can be produced by a method wherein the concrete is provided prior to providing the metal layer and providing the isolation material between the two (e.g. by depositing an isolation material onto the concrete plate), whereby the adhesion of the three layers is established by applying pressure to the stack of materials, while no physical contact is established between the concrete and the metal. The concrete can be cast in a continuous casting process or pre-cast concrete panels can be provided onto which the isolation materials and the metal layer are applied. Preferred embodiments of this method are described hereafter.

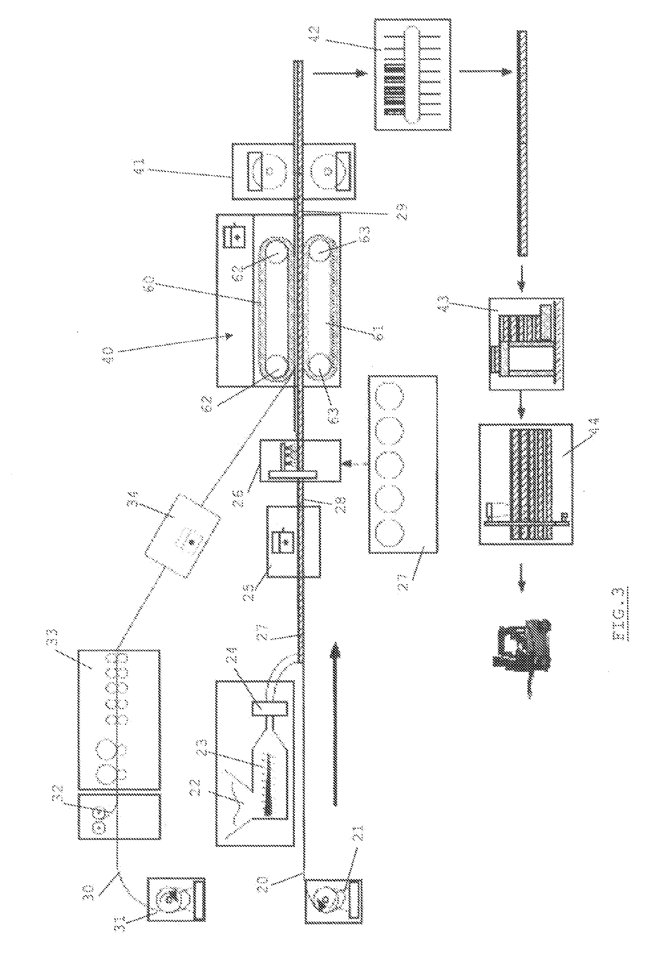

Figure 3 is a schematic representation of a continuous production process according to the invention, for manufacturing a panel according to the invention. A carrier foil 20 is unrolled from a coil 21, and moved forward in the direction of the arrow. A concrete mixture 22 is compacted through an extrusion screw 23 and mold 24 and deposited as a layer 27 onto the moving foil. Vertical rims are provided along the side edges of the track along which the foil is moving, so that the foil is folded upwards and rests against said rims, so as to laterally maintain the concrete which is cast onto the foil. The concrete mixture can be strengthened by adding fibers to it, which may be steel, glass or synthetic fibers. Possibly steel mats or other reinforcing mats can be added by placing them onto the foil or pressing them into the concrete. The stack is heated up to the desired temperature in a heating tunnel 25. This temperature is typically about 35°C for the combination steel/concrete/PUR. The mixture preferably comprises additives which promote the quick curing of the concrete mixture. Extra heat can be generated as a consequence, because the curing through these additives is an exothermic reaction. In this way, an at least partially cured concrete plate 28 is obtained. After that, a self-adhesive polyurethane foam is cast onto the concrete mixture, in a casting installation 26. This polyurethane foam is produced as a mixture of various components (as known in the art) in the mixing installation 27. A metal plate is unrolled from another coil 31, and preferably provided with a protective foil 32, after which the plate may be provided with a profile, e.g. with reinforcing ribs perpendicular to the line direction, in installation 33. In the profiling installation, the folded portions 12 and 13 are preferably also already produced along the side edges of the continuously advancing plate, as known in the art. The portions 14,15 extending into and outwards from the concrete plate are also produced according to a technique known in the art. The metal plate is heated up to a desired temperature (e.g. 35°C) by a second heating tunnel 34.

The above described method steps performed on the metal and concrete plates can be conducted according to known methods, as far as the type of carrier foil or protective foil is concerned, or the type and size of the installation for extrusion, heating or profiling. In the next step, both parts, i.e. the metal plate on the one hand and the concrete+isolation layer on the other are brought together. Said parts are moved forward in the direction parallel to the respective plates, and at a speed that is substantially the same for both parts. Next, the parts are brought together in a press installation. As shown in the figure, this is preferably a continuously moving press or a so-called 'double caterpillar' 40. In this machine, the metal plate and the concrete+isolation plate are pressed together over a given distance, to thereby adhere to each other. The result is a continuous panel 29, consisting of concrete, isolation material and a metal plate, mutually adhering to each other.

The 'double caterpillar' is a machine known in the art, which is provided with two sets of pressure plates, moved along in the manner of caterpillar tracks 60,61 by rolls (62,63). One set of pressure plates 60 is located above the moving concrete/iso/metal plate, another set of pressure plates 61 is located underneath the moving plate. The distance between the 'caterpillar tracks' is kept constant and can be set to a desired value as a function of the thickness of the panel to be produced. When an isolation material is applied that expands during curing (e.g. PUR or PIR), this means that the tracks 60/61, as a consequence of their fixed mutual distance, exert a (reaction) pressure on the expanding isolation material. In this way a good adhesion is obtained between the metal plate and the isolation material on the one hand and between the isolation material and the concrete plate on the other.

At the end of the double caterpillar, the isolation material (in the case of PUR/PIR) is expanded in volume, and the concrete mixture and the isolation material in the sandwich panel are sufficiently cured for the panel to be sawed into separate panels, in the sawing installation 41. After this, the panels are preferably stored in a conditioning room 42 to continue their curing process. After this conditioning phase, the panels are typically stacked 43 and wrapped in wrapping foil 44.

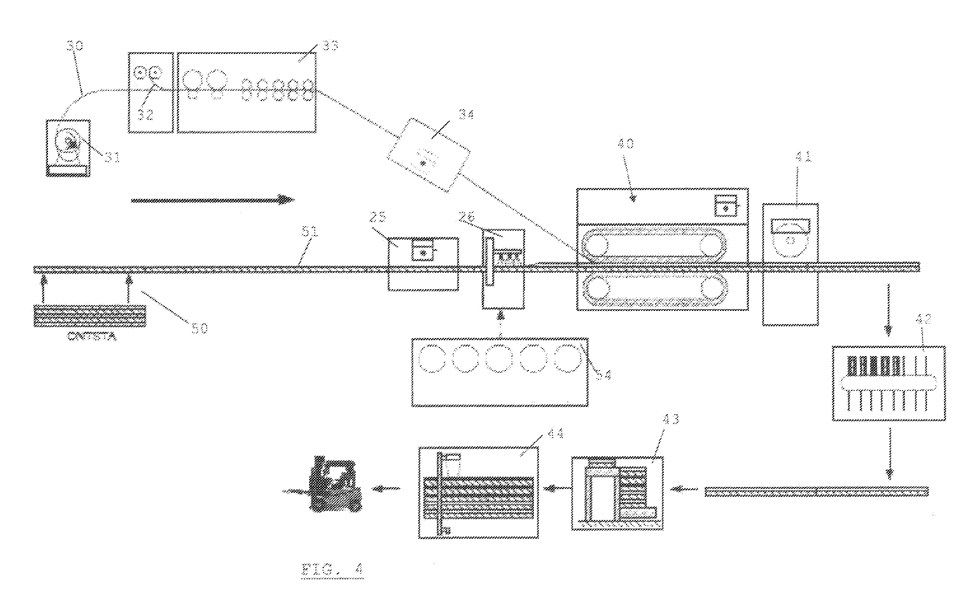

Figure 4 shows an alternative semi-continuous production method, wherein the concrete plates 50 are produced beforehand. These concrete plates are taken from stacks and placed in sequence and against each other, as if forming one continuous plate 51. The plates move through a heating tunnel 25 to bring them to a desired temperature and are then provided with a self-adhesive poly-urethane foam in a mixing and casting process 26/27, identical to the process shown in figure 3. A metal plate 30 is unrolled from another coil 31, the metal plate is then provided with a protective foil 32, profiled to a specific shape in installation 33, heated to a desired temperature in a second heating tunnel 34, in the same way as shown in figure 3 (elements 30-34).

Also in this case, both parts (metal plate and concrete+iso plate) are moving simultaneously in the direction of the respective plates, and are brought together in a continuous press or double caterpillar 40, identical to the one described with respect to figure 3. At the end of the double caterpillar, the isolation material has expanded and is sufficiently cured for the panel to be sawed into separate panels in the sawing installation 41, which comprises a saw at one side only (the side where the isolation layer and the metal plate are present). After that, the panel is preferably stored in a conditioning room 42 to continue the curing process. After the conditioning phase, the panels are typically stacked 43 and wrapped in wrapping foil 44.

An alternative production method may consist in the gluing of non-self-adhesive isolation materials by production methods as described above. For example a layer of rock wool may be used as the isolation material. In this case, the casting installation 26 is omitted from the installations depicted in figures 3 and 4, and rock wool mats are placed between the concrete layer and the metal plate, before they enter the double caterpillar. A glue layer (e.g. PUR glue) is applied preferably to the wool layer (on both sides) as well as to the metal and concrete layers, before entering the double caterpillar. The space between the caterpillar tracks is then set so that the wool layer is compressed and thereby becomes attached to the concrete and metal layer respectively.

## Claims

1. Panel for use in building constructions comprising a metal plate (3), a layer of isolation material (3) and a concrete plate (4), wherein the isolation material is located between the metal plate and the concrete plate, and wherein said isolation material is attached to the metal plate and the concrete plate and wherein the metal plate is not in physical contact with the concrete plate.

2. Building panel according to claim 1, wherein the isolation layer (3) is self-adhesive.

3. Building panel according to claim 1, wherein the isolation material (3) is attached to the metal plate and the concrete plate through a glue layer.

4. Building panel according to claim 1, wherein the isolation material is polyurethane (PUR) or polyisocyanurate (PIR).

5. Building panel according to claim 3, wherein the isolation material is rock wool.

6. Building panel according to any one of claims 1 to 5, wherein the layer of isolation material consists of a plurality of layers stacked on top of each other.

7. Building panel according to any one of the preceding claims, wherein the panel is provided at two sides with a tooth and groove shaped profile (10,11), wherein said tooth and groove are configured to fit together, so as to install two adjacent panels.

8. Building panel according to any one of claims 1 to 7, wherein said concrete plate (4) is a polymer concrete plate.

9. Method for producing a panel (1) according to any one of claims 1 to 7, wherein said method comprises the steps of :
• providing a concrete plate (4), followed by :
• providing a metal plate (2)
• providing an isolation layer (3) between said concrete plate and said metal plate to thereby produce a stack of the concrete plate, the isolation layer and the metal plate,
• Exerting a pressure onto said stack so as to obtain said panel (1), without establishing a physical contact between the concrete plate (4) and the metal plate (2).

10. Method according to claim 9, wherein said concrete plate (4) is a polymer concrete plate.

11. Method according to claim 9 or 10, wherein the method comprises the following steps :
• Depositing a layer of a concrete mixture on a moving surface, for example formed by a carrier foil (20) advancing in its longitudinal direction,
• Heating (25) said advancing concrete mixture, so that the mixture is at least partially cured and forms a concrete plate (28), moving forward in a direction parallel to the plate,
• Unrolling a metal plate (30) and moving said metal plate forward in a direction parallel to the metal plate, at a speed which is substantially the same as the speed of the concrete plate (28),
• Providing an isolation material between the advancing concrete plate (28) and the advancing metal plate (30).
• Feeding both the advancing concrete plate and metal plate into a press installation (40), wherein the advancing metal plate (30) is pressed over a given distance against the advancing concrete plate (28), and wherein the isolation material becomes attached to the metal and concrete plates, to thereby form a continuous panel (29),
• Sawing (41) the continuous panel (29) into separate panels.

12. Method according to claim 9 or 10, wherein the method comprises the following steps :
• Providing a plurality of pre-produced concrete plates (50),
• Placing said concrete plates in sequence and in contact with each other onto a moving surface, so that a line (51) is formed of panels advancing in longitudinal direction,
• Unrolling a metal plate (30) and moving said metal plate forward in a direction parallel to the metal plate, at a speed which is substantially the same as the speed of the concrete plate (28),
• Providing (26) an isolation material between the advancing concrete plates (51) and the advancing metal plate (30).
• Feeding both the line (51) of advancing concrete plates and the advancing metal plate into a press installation (40), wherein the advancing metal plate (30) is pressed over a given distance against the advancing concrete plates, and wherein the isolation material becomes attached to the metal and concrete plates, to thereby form a continuous panel (29), consisting of a row of concrete plates with a continuous layer of isolation material and metal plate attached thereto,
• Sawing (41) the continuous layer of isolation material and metal plate, to thereby obtain separate panels.

13. Method according to any one of claims 11 or 12, wherein the isolation material is a polyurethane (PUR) foam or a polyisocyanurate (PIR) foam which is deposited onto the advancing concrete plate (28) or onto the advancing concrete plates (51) in a casting installation (26), before the panel is formed in the press installation (40), and wherein the foam expands in volume in the press installation.

14. Method according to any one of claims 11 or 12, wherein the isolation material is a layer of rock wool, which is provided between the advancing concrete plate (28) or concrete plates (51) on the one hand and the advancing metal plate (30) on the other hand, after a glue layer has been provided on the layer of rock wool and/or on the metal and concrete plate(s), and before the plates enter the press installation (40).
